# EUROPÄISCHE PATENTSCHRIFT

(11) **EP 2 534 039 B1**
(45) Veröffentlichungstag und Bekanntmachung des Hinweises auf die Patenterteilung: **06.08.2014**
(21) Anmeldenummer: 11710110.5
(22) Anmeldetag: 12.01.2011
(51) Int. Cl.: B63B 25/16, B63B 11/04

(54) **SEESCHIFF, INSBESONDERE GASBETRIEBENES SEESCHIFF**
VESSEL, PARTICULARLY GAS-POWERED VESSEL
NAVIRE DE HAUTE MER, EN PARTICULIER NAVIRE DE HAUTE MER FONCTIONNANT AU GAZ

(30) Priorität: 08.02.2010 DE 102010007328
(43) Veröffentlichungstag der Anmeldung: 19.12.2012
(73) Patentinhaber: Meyer Werft GmbH, 26871 Papenburg (DE)
(72) Erfinder: LUHMANN, Henning, 26789 Leer (DE); LUBBERS, Jörg, 26725 (DE); CHRISTENSON, Ragner, 18059 Huckstorf (DE); UNTIEDT, Gerhard, 49774 Lähden (DE)
(74) Vertreter: Siekmann, Gunnar
(86) Internationale Anmeldenummer: PCT/DE2011/000022
(87) Internationale Veröffentlichungsnummer: WO 2011/095149

(56) Entgegenhaltungen:
- WO-A1-79/00909
- WO-A1-2008/075882
- GB-A- 766 128
- GB-A- 2 442 770
- US-A- 1 140 250

## Beschreibung

Die Erfindung bezieht sich auf ein Seeschiff, insbesondere gasbetriebenes Seeschiff, mit Tankräumen zur Mitführung von Gas, vorzugsweise flüssigem Erdgas, und mit wenigstens einem Aufbereitungsraum, in dem Einrichtungen und Armaturen zur anwendungsbestimmten Lagerung und/oder Bereitstellung von aus wenigstens einem der Tankräume der jeweiligen Anwendung zuzuführendem Gas angeordnet sind, wobei die Tankräume im Schiff nebeneinander angeordnet sind.

Im Zuge der Entwicklung von gasbetriebenen Schiffen, speziell Fahrgastschiffen, hat sich die Auffindung platzsparender Anordnungen von Flüssiggassystemen mit einem Tankraum zur Lagerung des Gases und einem Gasraum zur Aufbereitung des Gases als problematisch erwiesen. Die Tankräume und die Aufbereitungsräume (Gasräume) beanspruchen stets einen Teil der Laderaumkapazität des Schiffes, was sich insbesondere bei Fahrgastschiffen auf die Anzahl der installierbaren Kabinen negativ auswirkt.

Ein gattungsgemäßes Schiff ist aus der GB 766 128 A bekannt. Weitere Schiffsgestaltungen sind aus den Druckschriften WO 79/00909 A1, US 1 140 250 A, WO 2008/075882 A1 und GB 2 442 770 A bekannt.

Der Erfindung liegt die Aufgabe zugrunde, eine effiziente Anordnung von Tankräumen und Aufbereitungsräumen zur Lagerung und/oder Bereitstellung von flüssigem Erdgas auf einem Schiff, speziell einem Fahrgastschiff, zu finden.

Diese Aufgabe ist durch die Merkmale des Patentanspruchs 1 gelöst. Weiterbildungen und vorteilhafte Ausgestaltungen ergeben sich aus den Merkmalen der Unteransprüche 2 bis 10.

Das Seeschiff, insbesondere das gasbetriebene Seeschiff, mit mindestens zwei Tankräumen zur Mitführung von Gas, vorzugsweise flüssigem Erdgas, und mit wenigstens einem Gas-Aufbereitungsraum, in dem Einrichtungen und Armaturen zur anwendungsbestimmten Lagerung und/oder Bereitstellung von aus wenigstens einem der Tankräume der jeweiligen Anwendung zuzuführendem Gas angeordnet sind, zeichnet sich erfindungsgemäß dadurch aus, dass die Tankräume im Schiff nebeneinander angeordnet sind, wobei in einem Bereich zwischen einander benachbarten Tankräumen mindestens ein Gas-Aufbereitungsraum angeordnet ist.

Die Tankräume und der Gas-Aufbereitungsraum sind mit Vorteil in sich geschlossene Einheiten, sodass aus Leckagen austretendes Gas nicht in die äußere Umgebung gelangen kann.

Durch die erfindungsgemäße Anordnung wird insbesondere erreicht, dass alle nach allgemeinem Seerecht geltenden Vorschriften eingehalten werden. Durch die Anordnung der Tankräume nebeneinander ist es möglich, sich auf nur einen dazwischenliegenden Aufbereitungsraum zu beschränken. Der Aufbereitungsraum liegt etwa in der Mitte des Schiffes, wobei sich eine für die Leckrechnung optimale Anordnung von Rohren, Kabeln usw. ergibt.

Dies wird insbesondere auch dadurch erreicht, dass nach einer Weiterbildung in den Bereich zwischen einander benachbarten Tankräumen zusätzlich zum Aufbereitungsraum wenigstens ein Aufnahmeraum für Einrichtungen, welche für die Sicherheit des Schiffes relevant sind, angeordnet ist.

Der im Schiffsinneren verfügbare Raum ist durch die erfindungsgemäße Anordnung optimal genutzt.

Nach einer anderen Weiterbildung weist jeder Tankraum mindestens einen Tank auf. Jeder Tank ist vorzugsweise ein Zylindertank.

Mit besonderem Vorteil liegen die Zylindertanks parallel zur Schiffslängsachse.

Selbstverständlich ist es auch möglich, anderen Ausrichtungen und auch Tanks mit anderen Formgebungen in dem jeweiligen Tankraum unterzubringen. Beispielsweise kann ein Tank eine "biloop-Form" oder "triloop-Form" aufweisen. Jede geeignete Tankform, beziehungsweise Tankquerschnittsform, ist einsetzbar.

In dem Bereich zwischen einander benachbarten Tankräumen ist gemäß einer Weiterbildung der Erfindung zusätzlich zum Gas-Aufbereitungsraum noch wenigstens ein Aufnahmeraum für Einrichtungen, welche für die Sicherheit des Schiffes relevant sind, angeordnet. Ein solcher Aufnahmeraum ist mit Vorteil als in Schiffslängsrichtung verlaufender Gang ausgebildet, sodass darin die Leitungen für Lenz- und Ballastwasser und/oder Kabel des Schiffes verlegbar sind, was sich auf die bei der Schiffskonstruktion notwendige Leckrechnung positiv auswirkt.

Jeder Tankraum weist wenigstens einen nach außen vorkragenden Dom auf. Im Inneren der Tankdome befinden sich sämtliche Tankabsperrarmaturen.

Die Tankräume sind derart im Schiff angeordnet, dass die Vorkragungen ihrer Dome einander zugekehrt sind. Bei gemäß der Erfindung nebeneinanderliegenden Tankräumen können die einander zugekehrt vorkragenden Dome in einen jeweils zwei Domen gemeinsamen Gas-Aufbereitungsraum hinein vorkragen, wodurch Betrieb und Anschluss von Armaturen und sonstiger Leitungen, sowie deren Wartung vereinfacht ist.

Besonders vorteilhaft ist die Anordnung der Tankräume und der ihnen zugeordneten Gas-Aufbereitungsräume einschließlich des als Gang ausgebildeten Aufnahmeraumes unter dem Schottendeck des Seeschiffes. Eine solche Anordnung von Tank- und Gas-Aufbereitungsräumen zur Lagerung und/oder Verwendung von flüssigem Erdgas, insbesondere flüssigem Erdgas, auf einem Schiff ist grundsätzlich immer möglich, weil sich im allgemeinen das Verhältnis von der Schiffsbreite zur Schottendeckhöhe nur unwesentlich unterscheidet.

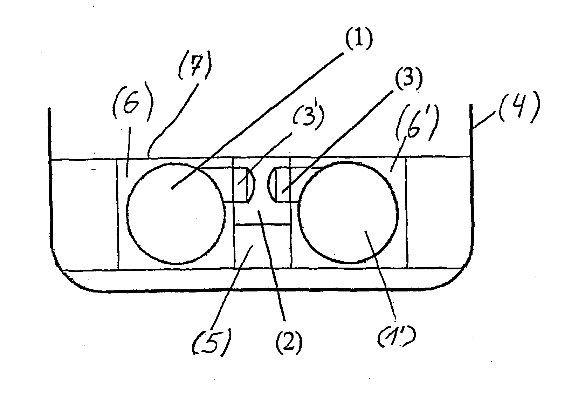

Ein Ausführungsbeispiel der Erfindung ist in der Zeichnung schematisch dargestellt.

Die Zeichnung zeigt einen Querschnitt durch den unteren Rumpfbereich eines Schiffes. Der Rumpf des Schiffes ist durch die Außenhaut 4 verdeutlicht.

Zwei als Zylindertanks ausgebildete Tanks 1, 1' sind mit ihren zugeordneten Tankräumen 6, 6' im Schiff nebeneinander angeordnet. Dabei ist in einem Bereich zwischen den einander benachbarten Tankräumen 6, 6' ein Gas-Aufbereitungsraum 2 angeordnet. Zusätzlich zum Gas-Aufbereitungsraum 2 ist zwischen den einander benachbarten Tankräumen 6, 6' ein Aufnahmeraum 5 angeordnet, der zur Aufnahme von Einrichtungen für die Sicherheit des Schiffes, wie zum Beispiel nicht weiter dargestellte Leitungen für Lenz- und Ballastwasser und/oder Kabel des Schiffes, dient.

Ein Raum 5 ist als in Schiffslängsrichtung verlaufender Gang ausgebildet. Bei diesem Ausführungsbeispiel verläuft der Gang unter dem Gas-Aufbereitungsraum 2.

Die Zeichnung lässt erkennen, dass jeder Tankraum 6, 6' wenigstens einen mit dem als Zylindertank ausgebildeten Tank 1, beziehungsweise 1' in Verbindung stehenden, nach außen vorkragenden Dom 3, 3' aufweist. Die Tankräume 6, 6' sind dabei im Schiff derart angeordnet, dass die Vorkragungen ihrer Dome 3, 3' einander zugekehrt sind. Dies ermöglicht es, den einander zugekehrten Domen 3, 3' der Tankräume 6, 6' einen gemeinsamen Aufbereitungsraum 2 zuzuordnen.

Das Schottendeck des Schiffes ist mit 7 bezeichnet. Die Zeichnung verdeutlicht, dass die Tankräume 6, 6', der Gas-Aufbereitungsraum 2 und der als Gang ausgebildete Aufnahmeraum 5 unter dem Schottendeck 7 angeordnet sind, wodurch gewährleistet ist, dass vorschriftsmäßige Abstände zur Außenhaut 4 eingehalten sind.

## Patentansprüche

1. Seeschiff, insbesondere gasbetriebenes Seeschiff, mit Tankräumen zur Mitführung von Gas, vorzugsweise flüssigem Erdgas, und mit wenigstens einem Gas-Aufbereitungsraum, in dem Einrichtungen und Armaturen zur anwendungsbestimmten Lagerung und/oder Bereitstellung von aus wenigstens einem der Tankräume der jeweiligen Anwendung zuzuführendem Gas angeordnet sind, wobei die Tankräume (6; 6') im Schiff nebeneinander angeordnet sind,
**dadurch gekennzeichnet,**
**dass** in einem Bereich zwischen einander benachbarten Tankräumen (6; 6') mindestens ein Gas-Aufbereitungsraum (2) angeordnet ist, und
**dass** jeder Tankraum (6; 6') wenigstens einen nach außen vorkragenden Dom (3; 3') aufweist.

2. Seeschiff nach Anspruch 1, **dadurch gekennzeichnet, dass** in dem Bereich zwischen einander benachbarten Tankräumen (6; 6') zusätzlich zum Gas-Aufbereitungsraum (2) wenigstens ein Aufnahmeraum (5) für Einrichtungen, welche für die Sicherheit des Schiffes relevant sind, angeordnet ist.

3. Seeschiff nach Anspruch 2, **dadurch gekennzeichnet, dass** jeder Tankraum (6; 6') mindestens einen liegenden Tank (1; 1') aufweist.

4. Seeschiff nach Anspruch 3, **dadurch gekennzeichnet, dass** jeder Tank (1; 1) ein Zylindertank ist.

5. Seeschiff nach Anspruch 4, **dadurch gekennzeichnet, dass** die Zylindertanks parallel zur Schiffslängsachse ausgerichtet liegen.

6. Seeschiff nach einem der Ansprüche 1 bis 5, **dadurch gekennzeichnet, dass** jeder Aufnahmeraum (5) als in Schiffslängsrichtung verlaufender Gang ausgebildet ist.

7. Seeschiff nach Anspruch 6, **dadurch gekennzeichnet, dass** in dem Aufnahmeraum (5) die Leitungen für Lenz- und Ballastwasser und/oder Kabel des Schiffes verlegt sind.

8. Seeschiff nach einem der Ansprüche 1 bis 7, **dadurch gekennzeichnet, dass** die Tankräume (6; 6') derart im Schiff angeordnet sind, dass die Vorkragungen ihrer Dome (3; 3') einander zugekehrt sind.

9. Seeschiff nach Anspruch 8, **dadurch gekennzeichnet, dass** die einander zugekehrten Dome (3; 3') nebeneinanderliegender Tankräume (6; 6') in einen gemeinsamen Gas-Aufbereitungsraum (2) hinein vorkragen.

10. Seeschiff nach Anspruch 9, **dadurch gekennzeichnet, dass** die Tankräume (6; 6') und ihnen zugeordnete Gas-Aufbereitungsräume (2) unter dem Schottendeck (7) des Seeschiffs angeordnet sind, derart, dass vorschriftsmäßige Abstände zur Außenhaut (4) des Seeschiffs eingehalten sind.

## Claims

1. A marine vessel, in particular gas-driven vessel, having tank spaces for carrying gas, preferably liquid natural gas, and having at least one gas processing space, in which equipment and fittings are arranged for proper storage and/or provision of gas to be supplied from at least one of the tank spaces to the respective use, wherein the tank spaces (6; 6') are arranged next to each other in the vessel, **characterised in that**
at least one gas processing space (2) is arranged in a region between mutually adjacent tank spaces (6; 6'),
and
each tank space (6; 6') has at least one outwardly projecting dome (3; 3').

2. The marine vessel according to Claim 1,
**characterised in that**
in addition to the gas processing space (2), at least one accommodation space (5) for equipment relevant to the safety of the vessel is arranged in the region between mutually adjacent tank spaces (6; 6').

3. The marine vessel according to Claim 2,
**characterised in that**
each tank space (6; 6') has at least one horizontal tank (1; 1').

4. The marine vessel according to Claim 3,
**characterised in that**
each tank (1; 1) is a cylindrical tank.

5. The marine vessel according to Claim 4,
**characterised in that**
the cylindrical tanks lie parallel to the vessel longitudinal axis.

6. The marine vessel according to any one of Claims 1 to 5,
**characterised in that**
each accommodation space (5) is formed as a corridor running in the vessel longitudinal direction.

7. The marine vessel according to Claim 6,
**characterised in that**
the lines for bilge and ballast water and/or cables of the vessel are laid in the accommodation space (5).

8. The marine vessel according to any one of Claims 1 to 7,
**characterised in that**
the tank spaces (6; 6') are arranged in the vessel such that the projections of their domes (3; 3') face each other.

9. The marine vessel according to Claim 8,
**characterised in that**
the mutually facing domes (3; 3') of adjacent tank spaces (6; 6') project into a common gas processing space (2).

10. The marine vessel according to Claim 9,
**characterised in that**
the tank spaces (6; 6') and gas processing spaces (2) associated therewith are arranged under the bulkhead deck (7) of the marine vessel such that the correct distances according to regulations are maintained from the outer skin (4) of the vessel.

## Revendications

1. Navire de haute mer, notamment navire de haute mer fonctionnant au gaz, comportant des chambres de réservoir pour le transport du gaz, de préférence du gaz naturel liquide, et comportant au moins une chambre de préparation du gaz, dans laquelle des dispositifs et armatures pour un stockage conforme à l'application et/ou une mise à dispositif du gaz à alimenter à partir d'au moins une des chambres de réservoir de l'application respective sont disposés, dans lequel les chambres de réservoir (6 ;6') sont disposées côté à côté dans le navire, **caractérisé en ce que** dans une zone entre des chambres de réservoir voisines l'une de l'autre (6 ;6') au moins une chambre de préparation de gaz (2) est disposée et **en ce que** chaque chambre de réservoir (6 ;6') présente au moins un dôme en porte à faux vers l'extérieur.

2. Navire de haute mer selon la revendication 1, **caractérisé en ce que** dans la zone entre des chambres de réservoir (6 ;6') voisines les unes des autres, en plus de la chambre de préparation de gaz (2), au moins une chambre de réception (7) des dispositifs, qui sont capitaux pour la sécurité du navire, est disposée.

3. Navire de haute mer selon la revendication 2, **caractérisé en ce que** chaque chambre de réservoir (6 ;6') présente au moins un réservoir horizontal (1 ;1').

4. Navire de haute mer selon la revendication 3, **caractérisé en ce que** chaque réservoir (1 ;1) est un réservoir cylindrique.

5. Navire de haute mer selon la revendication 4, **caractérisé en ce que** les réservoirs cylindriques sont alignés à l'horizontale parallèlement à l'axe longitudinal du navire.

6. Navire de haute mer selon une des revendications 1 à 5, **caractérisé en ce que** chaque chambre de réception (5) est conçue comme un couloir s'étendant dans la direction longitudinale du navire.

7. Navire de haute mer selon la revendication 6, **caractérisé en ce que** dans la chambre de réception (5) sont posées les lignes pour l'eau de drainage et de ballast et/ou les câbles du navire.

8. Navire de haute mer selon une des revendications 1 à 7, **caractérisé en ce que** les chambres de réservoir (6 ;6') sont disposées dans le navire de telle sorte que les porte à faux de leurs dômes (3 ;3') soient tournés les uns vers les autres.

9. Navire de haute mer selon la revendication 8, **caractérisé en ce que** les dômes tournés les uns vers les autres (3 ;3') des chambres de réservoir situées côté à côte (6 ;6') dépassent en porte à faux dans une chambre de préparation de gaz commune (2).

10. Navire de haute mer selon la revendication 9, **caractérisé en ce que** les chambres de réception (6 ;6') et les chambres de préparation de gaz (52) qui leur sont coordonnées sont disposées sous le pont de cloisonnement (7) du navire de haute mer, de telle sorte que des espacements conformes aux prescriptions par rapport à la coque (4) du navire de haute mer soient respectés.
